(19) Europäisches Patentamt
European Patent Office
Office européen des brevets

(11) **EP 3 797 233 B1**

(12) **EUROPÄISCHE PATENTSCHRIFT**

(45) Veröffentlichungstag und Bekanntmachung des Hinweises auf die Patenterteilung:
**28.09.2022   Patentblatt 2022/39**

(21) Anmeldenummer: **19727387.3**

(22) Anmeldetag: **28.05.2019**

(51) Internationale Patentklassifikation (IPC):
***F16J 9/20*** *(2006.01)*

(52) Gemeinsame Patentklassifikation (CPC):
**F16J 9/206**

(86) Internationale Anmeldenummer:
**PCT/EP2019/063852**

(87) Internationale Veröffentlichungsnummer:
**WO 2020/035188 (20.02.2020 Gazette 2020/08)**

(54) **DREITEILIGER ÖLABSTREIFRING**

THREE-PART OIL SCRAPER RING

SEGMENT RACLEUR D'HUILE EN TROIS PARTIES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.08.2018   DE 102018119584**
**28.08.2018   DE 102018120962**

(43) Veröffentlichungstag der Anmeldung:
**31.03.2021   Patentblatt 2021/13**

(73) Patentinhaber: **Federal-Mogul Burscheid GmbH**
**51399 Burscheid (DE)**

(72) Erfinder:
• **BÖHNKE, Florian**
**51371 Leverkusen (DE)**

• **MITTLER, Richard**
**51399 Burscheid (DE)**
• **BASTUCK, Thomas**
**40625 Düsseldorf (DE)**
• **BÄRENREUTER, Dirk**
**51519 Odenthal (DE)**

(74) Vertreter: **Kurig, Thomas**
**Becker Kurig & Partner**
**Patentanwälte mbB**
**Bavariastraße 7**
**80336 München (DE)**

(56) Entgegenhaltungen:
**EP-A1- 3 270 012          DE-A1- 3 833 322**
**DE-A1-102016 104 853   DE-T5-112015 001 071**
**JP-U- S5 962 358**

## Beschreibung

Ölabstreifringe sind seit längerem bekannt, wobei verschiedene Bauformen verwendet werden. Beispielsweise sind einteilige Ölabstreifringe mit zwei Abstreifstegen und Radialöffnungen in dem Ring zwischen den Abstreifstegen bekannt. Einteilige Ölabstreifringe werden oft auch zusammen mit Expanderfedern eingesetzt, um über den gesamten Umfang eine möglichst gleichmäßige Anlagekraft und damit auch eine möglichst gleichmäßige Abstreifwirkung zu erzielen. Es sind ebenfalls sogenannte dreiteilige Ölabstreifringe bekannt, bei denen zwei im Wesentlichen scheibenförmige bzw. flache Abstreifringe bzw. Rails von einer Feder in Axialrichtung beabstandet gehalten werden, um in Radialrichtung nach außen gedrückt zu werden.

Aus den Patenschriften US 2016/0076649 A1, US2017/0184198 A1, E 3270012 A1, DE 112015001071 T5 sowie JP H08-159282 A sind bereits unterschiedliche Bauformen von Abstreifringen und Ölabstreifringen für Verbrennungsmotoren bekannt.

Es gibt viele Parameter an einem Ölabstreifring, die die Abstreifeigenschaften beeinflussen.

Um das Abstreifverhalten zu verbessern, ist es unter anderem notwendig, das Öl in Richtung des Ölabstreifkolbenring-Nutgrundes zu befördern. Diesem Aspekt wurde bisher nur durch verschiedene Schlitze und Öffnungen zwischen den üblicherweise zwei Abstreifstegen eines Ölabstreifrings Rechnung getragen.

Es ist wünschenswert, die Abstreifeigenschaften von Ölabstreifringen weiter zu verbessern.

Die vorliegende Erfindung stellt einen dreiteiligen Ölabstreifring mit den Merkmalen von Anspruch 1 bereit. Vorteilhafte Ausführungen sind in den abhängigen Ansprüchen beschrieben.

Die Abstreifringe umfassen jeweils einen Ringkörper mit einer oberen Flanke, einer unteren Flanke einer Ringinnenfläche und einer Ringaußenfläche. Die obere Flanke oder Abstreifringflanke soll dabei an einer Kolbenringnutflanke oder an einer Feder eines dreiteiligen Ölabstreifrings jeweils in Axialrichtung anliegen. Die untere Flanke bzw.

Abstreifringflanke soll dabei an einer Kolbenringnutflanke oder an einer Feder eines dreiteiligen Ölabstreifrings jeweils in Axialrichtung anliegen. Die Ringinnenfläche ist dazu bestimmt, an einer Feder bzw. einem Expander eines dreiteiligen Ölabstreifrings in Radialrichtung anzuliegen.

Die Ringaußenfläche, weist in einem Schnitt in Axialrichtung, der durch die Achse der Rotationssymmetrie verlaufen soll, eine Ringaußenkontur auf.

Der Ringkörper weist in Axialrichtung eine Höhe H auf, die dem größten Abstand der oberen Flankenfläche zu der unteren Flankenfläche in Axialrichtung entspricht.

Die Ringaußenfläche bildet eine Lauffläche, wobei die Ringaußenkontur einen Krümmungsradius R aufweist, der um einen Faktor zwischen 1,5 bis 6, bevorzugt zwischen 3 bis 5 mal und weiter bevorzugt zwischen 3,5 bis 4,5 kleiner ist als die Höhe H des unteren bzw. oberen Abstreifrings.

Wie alle Kolbenringe, Abstreifringe und Ölabstreifringe umfassen die Ringkörper des oberen und des unteren Abstreifrings jeweils ebenfalls einen Ringstoß.

Der obere bzw. der untere Abstreifring sind dadurch gekennzeichnet, dass er in dem Bereich in dem er mit einer Zylinderinnenfläche in Kontakt steht, einen deutlich kleineren Krümmungsradius aufweist als die halbe Höhe des jeweiligen Abstreifrings. Dieser Aspekt der vorliegenden Erfindung betrifft insbesondere nur den oberen bzw. unteren Abstreifring eines dreiteiligen Ölabstreifrings, und nicht die Höhe des gesamten dreiteiligen Ölabstreifrings.

Der dreiteiliger Olabstreifring ist so ausgebildet, dass die Expanderfeder als MF Feder ausgebildet ist, wobei der obere Abstreifring am Pivotpunkt eine Krümmung aufweist, die stetig und glatt in die untere Flanke übergeht und zu dem Krümmungsradius (R) eine Tangente bildet, wobei sich die Krümmung über mehr als 90° erstreckt, sodass der Pivotpunkt der Ringaußenkontur der Lauffläche durch die Krümmung (R) gebildet wird, wodurch sich der Pivotpunkt im Abstand (R) über der unteren Flanke befindet, die Krümmung (R) dann direkt stetig und glatt in eine gerade Strecke übergeht, die wiederum in einen oberen Krümmungsradius (Ro) übergeht, der sowohl zu der tangentialen Strecke als auch zu der Schnittlinie der oberen Flanke tangential ist, wobei der obere Krümmungsradius (Ro) kleiner ist als der Krümmungsradius (R) an der Lauffläche, , und wobei der untere Abstreifring im Bereich des Pivotpunktes symmetrisch ballig ausgeführt ist, der Pivotpunkt sich von der unteren Flanke aus auf einer axialen Höhe zwischen 47 und 53% bzw. etwa 50 % der Höhe H des unteren Abstreifrings befindet, wobei der Radius R zwischen 0,05 und 0,15mm liegt.

Bei einer beispielhaften Ausführungsform ist der untere Abstreifring gegenüber einer Ebene symmetrisch, die sich entlang der halben Höhe H des Abstreifrings erstreckt.

In einer beispielhaften Ausführungsform des Abstreifrings beträgt die Höhe H des unteren und/oder oberen Abstreifrings zwischen 0,28 mm und 0,52 mm, bevorzugt zwischen 0,34 mm und 0,46 mm und weiter bevorzugt zwischen 0,38 und 0,42mm. Es werden auch beispielhafte Ausführungsformen mit einem Krümmungsradius R der Lauffläche des unteren und/oder oberen Abstreifrings zwischen 0,06mm und 0,04mm, bevorzugt zwischen 0,08mm und 0,12mm und weiter bevorzugt zwischen 0,09mm und 0,11mm offenbart.

In einer anderen beispielhaften Ausführungsform des Ölabstreifrings betragen die Höhen H des unteren und/oder oberen Abstreifrings zwischen 0,28 mm und 0,52 mm und die Krümmungsradien R der Laufflächen betragen zwischen 0,06mm und 0,04mm. Bei einer weiteren beispielhaften Ausführungsform des unteren und/oder oberen Abstreifrings beträgt die Höhe H des jeweiligen Abstreifrings zwischen 0,34 mm und 0,46 mm, der Krümmungsradius R der Lauffläche beträgt 0,08mm und 0,12mm. In einer zusätzlichen beispielhaften Ausführungsform des unteren und/oder oberen Abstreifrings beträgt die Höhe H des jeweiligen Abstreifrings zwischen 0,38 und 0,42mm und der Krümmungsradius R der Lauffläche beträgt zwischen 0,09mm und 0,11mm.

Bei einer anderen beispielhaften Ausführungsform des unteren Abstreifrings befindet sich eine radial äußerste Stelle der Ringaußenkontur der Lauffläche auf der halben Höhe H/2 des unteren Abstreifrings. Hier ist der untere Abstreifring so gestaltet, dass er in Axialrichtung gesehen eine Zylinderinnenfläche mittig berührt. Hier zeigt der untere Abstreifring keine Twistneigung.

Bei einer weiteren beispielhaften Ausführungsform des oberen Abstreifrings ist ein Übergang zwischen der Krümmung mit dem Krümmungsradius R und der unteren Flanke vorgesehen. Der Übergang ist hier im Querschnitt konvex ausgeführt und geht stetig und glatt in die Krümmung R über. Dadurch soll nicht abgestreiftes Öl, das den Spalt zwischen Zylinderinnenwand und der Lauffläche mit dem Radius R passiert hat, an der Lauffläche des oberen Abstreifrings anhaftend, an der Rückseite der Krümmung R nach innen in Richtung Nutgrund abgelenkt werden. Dies funktioniert besonders gut bei dem oberen Abstreifring eines dreiteiligen Ölabstreifring bei einer Aufwärtsbewegung des Kolbens

Bei einer weiteren beispielhaften Ausführungsform des Ölabstreifrings ist ein Übergang am unteren Abstreifring zwischen der Krümmung R und der oberen Flanke vorgesehen, wobei der Querschnitt konvex ausgeführt ist und stetig und glatt in die Krümmung R übergeht. Auch hier soll nicht abgestreiftes Öl, das den Spalt zwischen Zylinderinnenwand und der Lauffläche mit dem Radius R passiert hat an der Lauffläche anhaftend an der Rückseite der Krümmung R nach innen in Richtung Nutgrund abgelenkt wird. Dies funktioniert besonders gut bei dem unteren Abstreifring eines dreiteiligen Ölabstreifring bei einer Abwärtsbewegung des Kolbens.

Bei einer zusätzlichen beispielhaften Ausführungsform des Ölabstreifrings weist ein Übergang des unteren Abstreifrings zwischen der Krümmung R und der unteren Flanke einen Übergangs-Krümmungsradius Ru auf, der zwischen einmal der Höhe H und 40 mal der Höhe H, bevorzugt zwischen zweimal der Höhe H und 20 mal der Höhe H und weiter bevorzugt zwischen 4 mal der Höhe H und 10 mal der Höhe H beträgt. Ist die Ausführung symmetrisch, betrifft diese Ausführung auch den Übergang zwischen der Krümmung R und der oberen Flanke des unteren Abstreifrings. In dieser Ausführung kann ein kleinerer Verrundungsradius zwischen dem Übergangsbereich und der oberen Flanke bestehen.

Bei einer weiteren beispielhaften Ausführungsform des Ölabstreifrings ist ein Übergang des unteren Abstreifrings zwischen der Krümmung R und der unteren Flanke im Querschnitt als Spiralkurve ausgeführt und bevorzugt als hyperbolische Spiralkurve ausgeführt. Die Spiralkurve ist bevorzugt im Querschnitt konvex ausgeführt ist und geht stetig und glatt in die Krümmung R und in die untere Flankenfläche über. Hier wird eine verbesserte Umlenkung von Öl in Richtung des Nutgrundes erwartet, da die allmähliche Änderung des Krümmungsradius in der Spiralkurve es ermöglicht, dass daran entlangströmendes Öl besser in Richtung des Nutgrundes abgelenkt wird.

Bei einer symmetrischen Ausführung betrifft dies auch den Übergang zwischen der Krümmung R und der oberen Flanke, der dann ebenfalls einer Spiralkurve folgt.

Gemäß eines weiteren Aspekts wird eine beispielhafte Ausführungsform eines Ölabstreifrings beschrieben, wobei sich eine radial äußerste Stelle der Ringaußenkontur der Lauffläche des oberen Abstreifrings auf der Höhe des oberen Abstreifrings befindet, die dem Wert R des Krümmungsradius der Lauffläche entspricht, und wobei der Radius R der Lauffläche stetig und glatt in die untere Flanke übergeht. Die Höhe des Pivotpunkts liegt hier auf einer Höhe die oberen Abstreifrings die dem Krümmungsradius R entspricht, weshalb hier der Höhenwert genau dem Wert des Krümmungsradius entspricht. Der Krümmungsradius geht hier im Querschnitt direkt in die entere Flanke über, da der Kreis, der durch den Krümmungsradius R definiert ist, tangential zu der unteren Flanke liegt (im Querschnitt betrachtet).

Bei einer anderen beispielhaften Ausführungsform des Ölabstreifrings geht bei dem oberen Abstreifring im Querschnitt die obere Flanke an einem äußeren Rand stetig und glatt in die Krümmung Ro über, die kleiner ist als die Krümmung R der Lauffläche, wobei die Krümmungsradien R und Ro durch eine gemeinsame Tangente verbunden sind. Die beiden Krümmungsradien und die Tangente bilden zusammen die Ringaußenfläche des oberen Abstreifrings. Die Tangente bildet bei dem fertigen Ring eine Kegelstumpffläche, die sich nach oben hin das heißt in Richtung Brennraum verjüngt. Der obere und untere Krümmungsradius bilden jeweils Teilflächen von Toren.

Gemäß der Erfindung liegen im Querschnitt die Mittelpunkte der Krümmungsradien R und Ro des oberen Abstreifrings auf einer geraden, die parallel zu einer Axialrichtung des oberen Abstreifrings ist.

Damit ergeben sich bei dem oberen Abstreifring im Querschnitt zwei Teilkreise mit den Radien R und Ro, die durch eine Tangentenstrecke miteinander verbunden sind. Die Teilkreise mit den Radien R und Ro weisen insgesamt einen Winkel von 180° auf. Der Teilkreis mit dem Radius R erstreckt sich über einen Winkelbereich von mehr als 90°. Der Teilkreis mit dem Radius R erstreckt sich bevorzugt über einen Winkelbereich zwischen 95° und 115°, bevorzugt über einen Winkelbereich zwischen 98° und 110°, und weiter bevorzugt über einen Winkelbereich zwischen 100° und 105°. Der Teilkreis mit dem Radius Ro erstreckt sich über einen Winkelbereich von weniger als 90°. Der Teilkreis mit dem Radius R0 erstreckt sich bevorzugt über einen Winkelbereich zwischen 65° und 85°, bevorzugt über einen Winkelbereich zwischen 70° und 82°, und weiter bevorzugt über einen Winkelbereich zwischen 75° und 80°.

Im Querschnitt ist hier die Tangentenstrecke des Querschnitts des oberen Abstreifrings als die Wurzel der Summe des Quadrats der Differenz der Radien R und Ro und des Quadrats der Differenz der Summe der Radien und der Höhe H bestimmt.

$$l = \sqrt{(R - Ro)^2 + [(H - (R + Ro)]^2}$$

Die Winkel der Kegelfläche, die durch eine Rotation der die Tangentenstrecke um eine Axialachse des oberen Abstreifrings erzeugt wird, beträgt dabei zwischen 5° und 25°, bevorzugt über einen Winkelbereich zwischen 8° und 20°, und weiter bevorzugt über einen Winkelbereich zwischen 10° und 15°.

Die obere Ringflanke des oberen Abstreifrings geht bei dieser Ausführung im Querschnitt glatt und stetig in die Krümmung Ro über, die wiederum glatt und stetig in die Tangentenstrecke übergeht, die wiederum glatt und stetig in die Krümmung R der Lauffläche übergeht, die dann schließlich glatt und stetig in die untere Flanke übergeht. Die beiden Krümmungsradien und die Tangente bilden zusammen die Ringaußenfläche. Die Tangente bildet bei dem fertigen oberen Abstreifring eine Kegelstumpffläche, die sich nach oben hin verjüngt.

Bei einer weiteren beispielhaften Ausführungsform des Ölabstreifrings befindet sich eine radial äußerste Stelle der Ringaußenkontur der Lauffläche auf Höhe R des oberen Abstreifrings gemessen von dessen unterer Ringflanke, und weiterhin sind jeweils die Übergänge zwischen der unteren Ringflanke, der Krümmung R der Tangentenstrecke dem Krümmungsradius Ro sowie der oberen Flanke stetig und glatt ausgeführt. Die radial äußere Fläche setzt sich im Schnitt aus zwei Kreisbögen und einer Strecke zusammen, wobei keine Kanten auftreten.

Die Ringaußenfläche weist bevorzugt eine axiale Erstreckung von R, dem unteren Krümmungsradius R der Lauffläche auf.

Bei einer anderen beispielhaften Ausführungsform des Ölabstreifrings gestattet es die Form des oberen Abstreifrings, dass der obere Abstreifring bei einer Bewegung des Kolbens nach oben besonders gut auf einer Ölschicht aufschwimmen kann.

Gemäß eines weiteren Aspekts wird eine beispielhafte Ausführungsform eines Abstreifrings für einen dreiteiligen Ölabstreifring bereitgestellt, wobei der Krümmungsradius den Wert R aufweist, der um einen Faktor zwischen 1,5 bis 4, bevorzugt zwischen 1,8 bis 3 mal und weiter bevorzugt zwischen 2 bis 2,5 kleiner ist als die Höhe H des Abstreifrings. Diese Ausführung betrifft einen Abstreifring mit einem relativ großen Krümmungsradius R.

Bei einer anderen beispielhaften Ausführungsform des Ölabstreifrings beträgt der Krümmungsradius R des oberen und/oder unteren Abstreifrings zwischen 0,03 und 0,2mm bevorzugt zwischen 0,04 und 0,15mm und weiter bevorzugt zwischen 0,05 und 0,10mm, und eine Höhe H des unteren und/oder oberen Abstreifrings beträgt zwischen 0,2 und 0,8mm, bevorzugt zwischen 0,25 und 0,15mm und weiter bevorzugt zwischen 0,3 und 0,5mm.

Bei einer weiteren beispielhaften Ausführungsform des Ölabstreifrings beträgt der Krümmungsradius R des untern und/oder oberen Abstreifrings zwischen 0,03 und 0,2mm, und eine Höhe H des unteren und/oder oberen Abstreifrings beträgt zwischen 0,2 und 0,8mm. Bei einer zusätzlichen beispielhaften Ausführungsform des unteren und/oder oberen Abstreifrings beträgt der Krümmungsradius R zwischen 0,04 und 0,15mm, und eine Höhe H des unteren und/oder oberen Abstreifrings beträgt zwischen 0,25 und 0,15mm. Bei einer anderen beispielhaften Ausführungsform des unteren und/oder oberen Abstreifrings beträgt der Krümmungsradius R zwischen 0,05 und 0,10mm, und eine Höhe H des unteren / und/oder oberen Abstreifrings beträgt zwischen 0,3 und 0,5mm. Diese Kombinationen werden als besonders aussichtreich für ein gutes Abstreifergebnis angesehen.

Gemäß der Erfindung befindet sich eine radial äußerste Stelle der Ringaußenkontur der Lauffläche des unteren Abstreifrings zwischen 50 und 75% und weiter bevorzugt zwischen 65 und 70% der Höhe H des unteren Abstreifrings. Der untere Abstreifring drückt also an einer Stelle gegen die Zylinderinnenfläche, die oberhalb der Mitte des unteren Abstreifrings liegt, was ein Twisten des unteren Abstreifrings bewirkt.

Bei einer zusätzlichen beispielhaften Ausführungsform des Ölabstreifrings ist beim unteren Abstreifring jeweils ein unterer und ein oberer Übergang zwischen der Krümmung R und der unteren Flanke bzw. der oberen Flanke vorgesehen, die im Schnitt jeweils Tangenten an der Krümmung R bilden, und die sich in Bezug auf eine Radialebene jeweils in einem Winkel zwischen 30° und 75° in Richtung der oberen bzw. der unteren Flanke erstrecken.

Die Übergänge sind bei dieser Ausführung des Ölabstreifrings im Wesentlichen gerade ausgeführt, wobei eine Ecke bzw. Kante zwischen dem oberen bzw. unteren Übergang ebenfalls verrundet sein kann. Die Ringaußenfläche des unteren Abstreifrings wird hier im Querschnitt im Wesentlichen durch einen Kreisbogen und zwei tangentialen Strecken, die als obere bzw. untere Übergangstangente bezeichnet werden können, gebildet.

Bei einer weiteren beispielhaften Ausführungsform des Ölabstreifrings liegen die Stellen, an denen der obere bzw. untere Übergang jeweils in die obere bzw. untere Flanke übergehen bei dem unteren und/oder oberen Abstreifring in Axialrichtung übereinander, bzw. weisen den gleichen Radialabstand von der axialen Symmetrieachse auf.

Bei einer anderen beispielhaften Ausführungsform des Ölabstreifrings ist jeweils ein unterer und ein oberer Spiralübergang zwischen dem Krümmungsradius R und der unteren Flanke bzw. der oberen Flanke des unteren Abstreifrings vorgesehen, wobei die Spiralübergänge jeweils glatt und stetig in die Krümmung R bzw. die obere / untere Flanke übergehen. Diese Ausführung gestattet einen gleichmäßigeren Übergang zwischen der Krümmung der Lauffläche und den Kolbenringflanken als es mit geraden Abschnitten möglich wäre. Gerade Spiralübergänge können am dem unteren Abstreifring eine verbesserte Strömung des abgestreiften Öls in Richtung des Kolbenringnutgrundes ermöglichen. Ein Spiralübergang betrifft hier einen Schnitt in Axialrichtung. Ein Spiralübergang ist dabei im Schnitt als Spiralkurve, bevorzugt als hyperbolische Spiralkurve, ausgeführt. Die Übergänge sind konvex ausgeführt und gehen bevorzugt stetig und glatt in den Krümmungsradius R und in die Flankenflächen über.

Bei einer weiteren beispielhaften Ausführungsform des dreiteiligen Ölabstreifrings ist ein oberer Abstreifring mit den zwei Krümmungsradien und der dazwischenliegenden Tangentialstrecke wie er vorstehend beschrieben ist eingesetzt während ein unterer Abstreifring mit einem Krümmungsradius und zwei geraden oder spiralförmigen Übergängen wie vorstehend beschrieben eingesetzt wird. Hier ist bemerkenswert, dass beide Ringe jeweils entgegengesetzt twisten. Zusätzlich liegen bei dieser Ausführung die Kontaktpunkte bzw. -linien der Abstreifringe dichter zusammen als ein Abstand der jeweiligen Mittenebenen der Abstreifringe.

Gemäß der Erfindung ist die Expanderfeder als MF-Feder ausgeführt. Gerade MF-Expanderfedern gestatten einen besonders guten Öldurchgang in Radialrichtung, da die MF-Expanderfeder im Vergleich zu SS50 und MD Expanderfedern nur einen geringen Teil des Spalts zwischen dem oberen und dem unteren Ölabstreifring abdeckt.

Im Folgenden wird die vorliegende Erfindung anhand von Darstellungen bevorzugter Ausführungen beschrieben.

Figur 1 zeigt einen herkömmlichen Abstreifring in einer Schnittansicht.

Figur 2 zeigt eine erste Ausführungsform eines erfindungsgemäßen Abstreifrings in einer Schnittansicht.

Figur 3 zeigt einen herkömmlichen dreiteiligen Ölabstreifring in einer Schnittansicht.

Figur 4 zeigt eine Ausführungsform eines erfindungsgemäßen oberen Abstreifrings in einer Schnittansicht.

Figur 5 zeigt eine Ausführungsform eines erfindungsgemäßen unteren Abstreifrings in einer Schnittansicht.

Figur 6 zeigt einen dreiteiligen Ölabstreifring mit erfindungsgemäßen oberen und unteren Abstreifringen in einer Schnittansicht.

Figur 7 zeigt einen dreiteiligen Ölabstreifring mit erfindungsgemäßen oberen und unteren Abstreifringen in einer Schnittansicht.

Die Darstellungen sind schematische und nicht-maßstabgerecht. Sowohl in der Beschreibung als auch in den Figuren werden gleiche oder ähnliche Bezugszeichen verwendet, um auf gleiche oder ähnliche Komponenten oder Elemente Bezug zu nehmen.

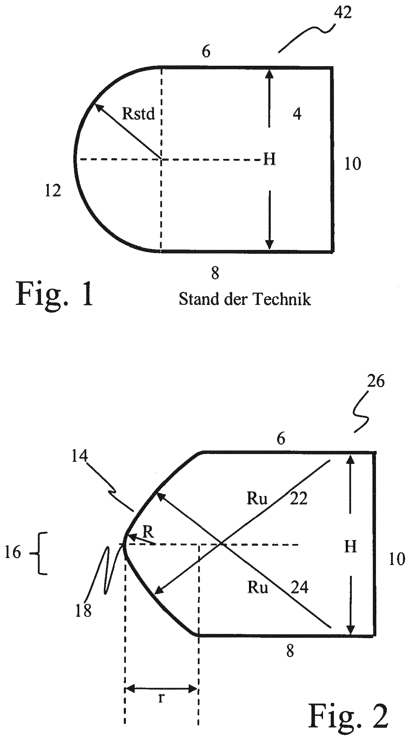

Figur 1 zeigt einen herkömmlichen Abstreifring 42 in einer Schnittansicht. Der Abstreifring umfasst einen Ringkörper 4, der oben von einer oberen Flanke oder Flankenfläche 6 und unten von einer unteren Flankenfläche 8 begrenzt ist. Die Außenkontur des Rings weist einen einheitlichen Krümmungsradius Rsdt auf. Der Krümmungsradius bildet die Lauffläche 12 des Abstreifrings. Der Abstand der oberen und unteren Flankenflächen definiert dabei die Höhe H des Abstreifrings. Der einheitliche Krümmungsradius Rsdt beträgt dabei genau die Hälfte der Höhe H des Abstreifrings. Die Abstreifeigenschaften dieses Rings lassen sich durch eine Veränderung der Höhe des Rings, sowie des Materials und vor allem der radialen Dicke sowie den Eigenschaften einer eingesetzten Expanderfeder beeinflussen. Die Abstreifringe nach dem Stand der Technik haben einen zur Zylinderinnenfläche gerichteten, grundsätzlichen halbkreisförmigen, entsprechenden Außenradius Rsdt, der der Hälfte der Höhe H entspricht.

Figur 2 zeigt eine erste Ausführungsform eines erfindungsgemäßen unteren Abstreifrings 26 in einer Schnittansicht. Der untere Abstreifring 26 umfasst einen Ringkörper 4, der oben von einer oberen Flanke oder Flankenfläche 6 und unten von einer untern Flankenfläche 8 begrenzt ist. Die Höhe H ist auch hier als der Abstand zwischen den Flankenflächen in Axialrichtung definiert. Die Ringaußenseite 12 umfasst im Schnitt entlang der Axialrichtung und durch die axiale Symmetrieachse eine Ringaußenkontur 14. Die Ringaußenkontur 14 bildet eine Lauffläche 16, die einen Krümmungsradius R aufweist, der deutlich kleiner ist als die Höhe H. Der Krümmungsradius ist um einen Faktor zwischen 3,5 bis 4,5 kleiner ist als die Höhe H des unteren Abstreifrings 26. Die Krümmung mit dem Radius R der Lauffläche 16 geht stetig und glatt in den Übergang 20 zwischen der Krümmung R und der oberen Flanke und dem Übergang 22 zwischen der Krümmung R und der unteren Flanke über. Die jeweiligen Krümmungsradien der Übergänge 20 und 22 können dabei viel größer ausfallen als die Höhe H. Es ist ebenfalls vorgesehen, Kanten die zwischen den Übergängen 20 und 22 und den Flanken 6, 8 auftreten können, zu verrunden. Insgesamt stellt sich die Ringaußenfläche als eine Kombination von drei Radien dar, dem Krümmungsradius R der Lauffläche, die oben/ unten in die Übergänge 20, 22 mit den Übergangs-Krümmungsradien Ru übergehen. Der radial äußerste Stelle bzw. Pivotpunkt 18 der Ringaußenkontur der Lauffläche 16 bildet den Anlagepunkt der Ringaußenkontur 14. Der Anlagepunkt bildet bei dem fertigen unteren Abstreifring 26 dann eine Anlagelinie. Diese Laufflächenkontur ist für einen reduzierten Ölverbrauch optimiert.

Bei dem dargestellten unteren Abstreifring weist der Bereich, der an der Zylinderinnenwand anliegen soll, einen deutlich kleineren Krümmungsradius auf als bei Abstreifringen des Standes der Technik. Der Krümmungsradius R soll hier im Bereich von 0,08 bis 0,12mm liegen. Die Übergangsbereiche 20 und 22 beträgt vorzugsweise 0,75mm. Der Abstand r der die radiale Erstreckung der Ringaußenfläche 12 beschreibt beträgt zwischen 0,1 bis 0,2mm, und soll in der Figur 2 0,15mm betragen. Die Außenkontur des unteren Abstreifrings ist spiegelsymmetrisch gegenüber einer Ebene die auf halber Höhe H durch den unteren Abstreifring verläuft. Die neue Ringaußenkontur zeigte sowohl in der Simulation als auch unter Einsatzbedingungen Vorteile bezüglich des Ölverbrauchs.

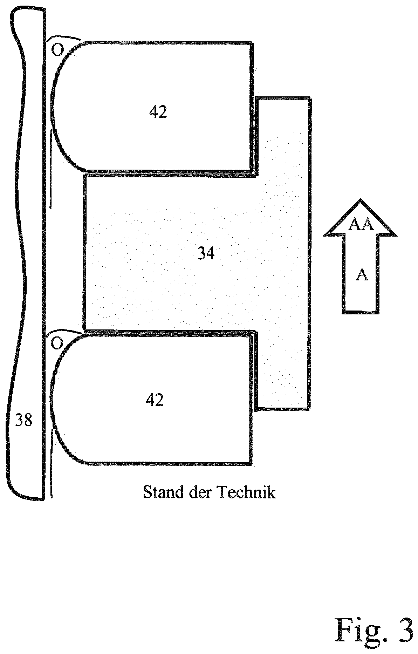

Figur 3 zeigt einen herkömmlichen dreiteiligen Ölabstreifring 44 in einer Schnittansicht. Der herkömmliche Ölabstreifring 44 weist einen herkömmlichen oberen Abstreifring 42 und einen herkömmlichen unteren Abstreifring 42 auf. Beide Abstreifringe sind als herkömmliche Abstreifringe 42 ausgeführt. Beide herkömmliche Abstreifringe 42 werden von einer Expanderfeder 34 nach außen gegen eine Zylinderinnenwand 38 gedrückt. Die Expanderfeder 34 stellt ebenfalls sicher, dass die beiden herkömmlichen Abstreifringe 42 einen ausreichenden Abstand in Axialrichtung beibehalten. Es sind bisher 3-teilige Ölabstreifringe auf dem Markt die verschiedene Abstreifringe verwenden, bisher werden jedoch als oberer Abstreifring und als unterer Abstreifring Ringe verwendet, die die gleiche Außenkontur aufweisen, also beide den gleichen Krümmungsradius und die gleiche Kontur aufweisen. Beide Abstreifringe streifen Öl auf der Innenseite des Zylinders 38 auf gleiche Weise ab. Hier ist der Abstreifvorgang in einer Aufwärtsbewegung AA dargestellt. Da der Abstreifring symmetrisch ausgeführt ist entspricht die Darstellung der Situation bei einer Abwärtsbewegung, daher genau der, die bei einer Aufwärtsbewegung auftreten sollte.

Es ist das Ziel eine verbesserte Ölabstreifwirkung und/oder ein Minimum der Reibverluste im Vergleich zu einem herkömmlichen Ölabstreifring mit identischen oberen und unteren Abstreifringen zu erreichen. Ein weiterer wichtiger Aspekt besteht darin, die Entstehung und Ablagerung von Ölkohle im Bereich einer Expanderfeder zu vermeiden oder zumindest deutlich zu verringern. Weiterhin ist es wünschenswert die Reibung, die durch einen Ölabstreifring erzeugt wird ohne bedeutende Einbußen beim Ölverbrauch zu erreichen.

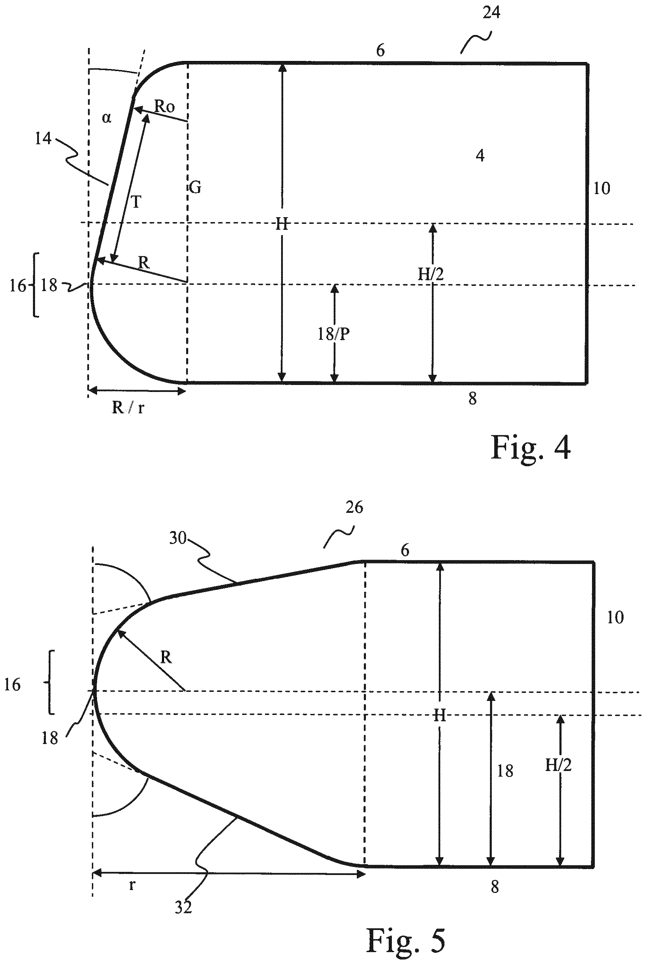

Figur 4 zeigt eine Ausführungsform eines erfindungsgemäßen oberen Abstreifrings in einer Schnittansicht. Im Gegensatz zu dem Abstreifring von Figur 1 ist der Ring von Figur 4 nicht bezüglich einer Ebene symmetrisch, die sich auf der halben Höhe H durch den Kolbenring erstreckt. Figur 4 zeigt eine Querschnittansicht durch den oberen Abstreifring 2 mit dem Ringkörper 4, der oben von einer oberen Flanke oder Flankenfläche 6 und unten von einer unteren Flankenfläche 8 begrenzt ist. Auf der Innenseite ist der Ringkörper durch eine Ringinnenfläche 10 begrenzt. Der Ringinnenfläche 10 liegt die Ringaußenseite 12 gegenüber. Die Ringaußenseite 12 bildet die Ringaußenkontur 14. An der Ringaußenkontur 14 bildet die Krümmung R eine Lauffläche 16. Die Krümmung R geht stetig und glatt in die untere Flankenfläche 8 über, bzw. die untere Flankenfläche bildet zu dem Krümmungsradius R eine Tangente. Die Krümmung erstreckt sich über mehr als 90° sodass die radial äußerste Stelle bzw. Pivotpunkt 18 der Ringaußenkontur der Lauffläche 16 durch die Krümmung R gebildet wird. Der Pivotpunkt 18 befindet sich dabei im Abstand R über der unteren Abstreifringflanke. Die Krümmung R der Kontur geht dann direkt stetig und glatt in eine gerade Strecke über die bei dem oberen Abstreifring eine Kegelstumpfmantelfläche bildet. Die tangentiale Strecke wiederum geht in einen oberen Krümmungsradius Ro über, der sowohl zu der tangentialen Strecke als auch zu der Schnittlinie der oberen Flanke tangential ist. Dier Radius Ro ist dabei kleiner als der Radius R. Die tangentiale Strecke ist hier eine gemeinsame Tangente T zu den Krümmungsradien R und Ro. In der Ausführung liegen die Mittelpunkte der Krümmungsradien R und Ro in Axialrichtung genau übereinander, sodass die Kegelstumpfmantelfläche nach oben hin zusammenläuft.

Der Pivot-Punkt 18 des asymmetrisch konischen Rails bzw. oberen Abstreifrings ist in Richtung unterer Flanke versetzt. Der Pivot-Punkt liegt auf 20 bis 40% der axialen Höhe H des oberen Abstreifrings. Damit entspricht der Wert des Krümmungsradius R einem Fünftel bis einem Zweieinhalbtel der Höhe H. Die axiale Höhe des oberen Abstreifrings bleibt im Bereich von 0,3 bis 0,5mm. Weiterhin wird die Außenkontur des oberen Abstreifrings durch die Maße des Krümmungsradius R und den Winkel $\alpha$ bestimmt. Der Winkel $\alpha$ ist der Kegelwinkel der Kegelstumpffläche bzw. der Winkel der gemeinsamen Tangente der Krümmungsradien R und Ro zu der Axialrichtung. Der Radius wird hier zwischen 0,15 und 0,25mm und der Winkel $\alpha$ zwischen 5 und 20° betragen. Der Radius Ro kann zwischen 0,1 und 0,2mm betragen. Dieser Abstreifring soll als oberer Abstreifring eingesetzt werden.

Figur 5 zeigt eine weitere Ausführungsform eines erfindungsgemäßen unten Abstreifrings in einer Schnittansicht. Hier wird ein unterer Abstreifring mit einer Lauffläche 16 bereitgestellt, die im Bereich des Pivotpunktes 18 symmetrisch ballig ausgeführt ist. Der Pivotpunkt befindet sich jedoch oberhalb einer Mittelebene H/2. Der Pivotpunkt 18 befindet sich von der unteren Flanke aus betrachtet auf einer axialen Höhe zwischen 55 und 75% der Höhe H. Der Radius R der die Balligkeit der Lauffläche definiert, kann liegt im Bereich zwischen 0,05 und 0, 15mm. Der Krümmungsradius R geht nach oben und unten jeweils tangential in die obere Übergangstangente 30 und die untere Übergangstangente 32 über. Die Übergangstangenten können dabei Winkel zwischen 30° und 75° zur Axialrichtung aufweisen. Die Übergangstangenten 30 und 32 gehen mit einem Knick in die obere bzw. untere Flanke über, die verrundet ausgeführt sein kann. Die Kontur des unteren Abstreifrings lässt eine verringerte Reibung erwarten.

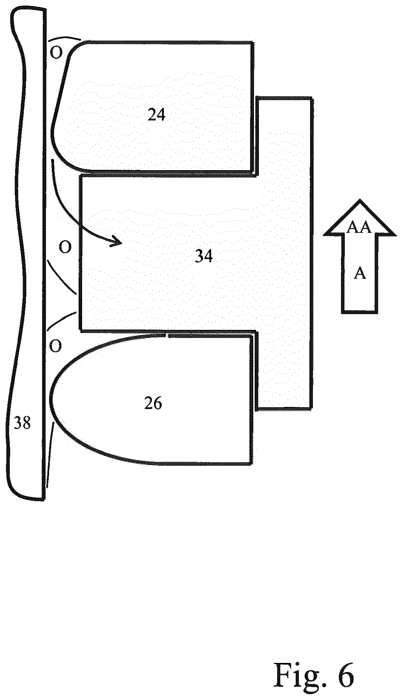

Figur 6 zeigt einen dreiteiligen Ölabstreifring mit erfindungsgemäßen Abstreifringen in einer Schnittansicht. Der dreiteilige Ölabstreifring umfasst einen oberen Abstreifring 24 der gemäß der Ausführung der Figur 4 ausgeführt ist. Der dreiteilige Ölabstreifring umfasst einen unteren Abstreifring 23 der gemäß der Ausführung der Figur 5 ausgeführt ist. Dieser erfindungsgemäße Ölabstreifring setzt erstmals zwei verschiedene Abstreifringe mit zwei verschiedenen Abstreifringkonturen in einem Ölabstreifring ein. Der obere Abstreifring 24 und der untere Abstreifring 26 werde durch eine Expanderfeder 34 die als eine MF-Mäanderfeder ausgeführt ist radial nach außen gegen eine Zylinderinnenfläche 38 gedrückt. Die MF-Mäanderfeder 34 hält einen definierten Axialabstand zwischen oberen Abstreifring 24 und dem unteren Abstreifring 26 aufrecht. In der Figur 6 bewegt sich der Ölabstreifring in Axialrichtung aufwärts wie es durch den Pfeil AA angedeutet ist.

Der oberen Abstreifring 24 erzeugt durch die teilweise konische Lauffläche 16 einen "Oil Catching Effect" bei dem der obere Abstreifring 24 auf dem Öl aufschwimmt und das Öl zwischen die Abstreifringe 24, 26 gelangt. Der obere Abstreifging 24 kann durch den konischen Teil verhindern, dass sich das Öl vor dem oberem Abstreifring 24 staut und sich oben zwischen der oberen Abstreifringflanke 6 und einer oberen Kolbenringnutflanke sammelt. Der unten angeordnete untere Abstreifring 26 mit einer symmetrisch balligen Lauffläche verhindert, dass das Öl O den Ringzwischenraum nach unten verlässt. Ein ebenfalls konische ausgeführter unterer Abstreifring würde dazu führen, dass sich zu viel Öl zwischen einer Kolbenaußenfläche und der Zylinderinnenfläche 38 sammeln, und eine erhöhten Reibung hervorrufen kann.

In dieser Ausführung wir kontinuierlich Öl zwischen dem oberen Abstreifring 24 und dem unteren Abstreifring 26 und durch die MF-Expanderfeder transportiert, was eine Verkokung der Feder verhindern soll.

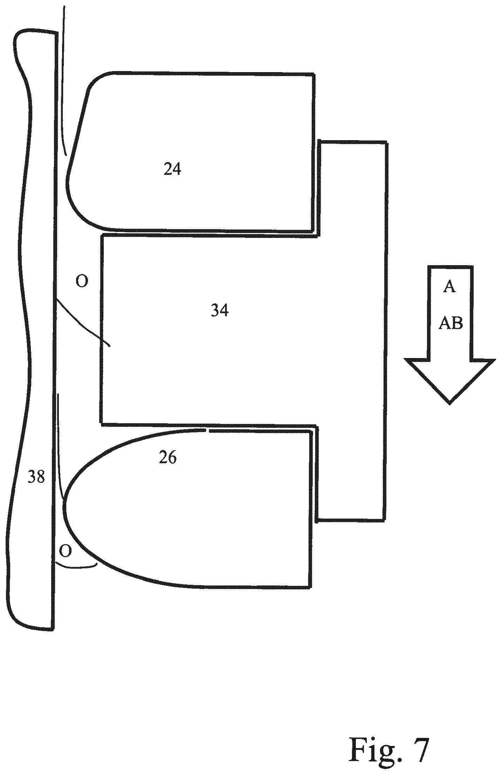

Figur 7 zeigt einen dreiteiligen Ölabstreifring der Figur 6 bei einer Bewegung in Axialrichtung abwärts wie es durch den Pfeil AA angedeutet ist.

Der obere Abstreifring 24 erzeugt durch die teilweise konische Lauffläche 16 einen dünnen Ölfilm, da der obere Abstreifring 24 durch die fehlende Schräge nicht auf dem Ölfilm aufschwimmt und den größten Teil das Öl O vor sich her schiebt. Der obere Abstreifring 24 weist durch seinen geringeren Krümmungsradius R eine größere Abstreifleistung auf als der untere Abstreifring 26. Die Differenz der Abstreifleistungen wird zwischen dem oberen Abstreifring 24 und dem unteren Abstreifring 26 in Richtung Nutgrund (nicht dargestellt) abgeleitet.

Grundsätzlich wird hier bei einem dreiteiligen Ölabstreifring ein oberer Abstreifring 24 mit einer asymmetrisch konischen Außenfläche eingesetzt während ein unterer Abstreifring 26 mit einer symmetrisch balligen Lauffläche eingesetzt wird. Durch diese Anordnung wird das Schmieröl auf der Zylinderlauffläche im Aufwärtshub eingesammelt und durch den "Oil Catching Effect" zwischen den oberen Abstreifring 24 und dem unteren Abstreifring 26 gesammelt und in Richtung Kolbenringnutgrund abgeführt. Das abgestreifte Öl kann durch entsprechende Kanäle im Kolben zurück in das Kurbelgehäuse gelangen. Das Prinzip basiert auf einer asymmetrischen Abstreifleistung des oberen Abstreifrings 24, dessen Abstreifleistung bei einer Abwärtsbewegung über der des unteren Abstreifrings 26 liegt. Das wird dadurch erreicht, dass die Krümmung der Lauffläche beim oberen Abstreifring 24 kleiner ist als die Krümmung der Lauffläche bei dem unteren Abstreifring 26. Damit sammelt sich abgestreiftes Öl bei einer Abwärtsbewegung zwischen den Abstreifringen 24 und 26. Bei einer Aufwärtsbewegung hingegen bewirkt der konische Teil des oberen Abstreifring 24 ein Aufschwimmen des oberen Abstreifrings 24 auf der Ölschicht was die Abstreifleistung deutlich herabsetzt. Die Abstreifleistung des oberen Abstreifringes 24 wird dabei bevorzugt unter die des unteren Abstreifrings 26 verringert. Dies führt dazu, dass auch bei einer Aufwärtsbewegung von dem in Bewegungsrichtung "hinteren" Abstreifring mehr Öl abgestreift wird. Insgesamt wird so sowohl bei einer Aufwärtsbewegung AA als auch bei einer Abwärtsbewegung Öl zwischen den Abstreifringen 24, 26 gefangen und in Richtung Nutgrund und weiter in das Kurbelgehäuse transportiert.

Anstelle des unteren Abstreifrings nach Figur 5 kann auch ein Abstreifring nach Figur 2 eingesetzt werden.

Bezugszeichenliste

| 2 | Abstreifring |
| 4 | Ringkörper |
| 6 | obere Flanke bzw. Flankenfläche |
| 8 | untere Flanke bzw. Flankenfläche |
| 10 | Ringinnenfläche |
| 12 | Ringaußenfläche, |
| 14 | Ringaußenkontur, |
| 16 | Lauffläche |
| 18 | radial äußerste Stelle bzw. Pivotpunkt der Ringaußenkontur der Lauffläche |
| 20 | Übergang zwischen dem Krümmungsradius R und der oberen Flanke |
| 22 | Übergang zwischen dem Krümmungsradius R und der unteren Flanke |
| 24 | oberer Abstreifring |
| 26 | unterer Abstreifring |
| 28 | dreiteiliger Kolbenring / Ölabstreifring |
| 30 | obere Übergangstangente |

| | |
|---|---|
| 32 | untere Übergangstangente |
| 34 | Feder / Expanderfeder |
| 36 | MF-Feder / MF-Expanderfeder |
| 38 | Zylinderinnenfläche |
| 42 | Herkömmlicher Abstreifring |
| 44 | Bewegungsrichtung des Kolbens nach oben |
| 46 | Bewegungsrichtung des Kolbens nach unten |
| A | Axialrichtung |
| AA | Bewegung in Axialrichtung aufwärts |
| AB | Bewegung in Axialrichtung abwärts |
| G | Gerade die parallel zu der Axialrichtung verläuft |
| H | Höhe des Ringkörpers |
| O | Öl |
| P | Höhe der radial äußersten Stelle der Ringaußenkontur der Lauffläche |
| r | radiale Erstreckung der Ringaußenfläche |
| R | Krümmungsradius der Lauffläche |
| Ro | Krümmungsradius der in die obere Flanke übergeht |
| Ru | Übergangs-Krümmungsradius Ru |
| Rsdt | Krümmungsradius einer Lauffläche eines herkömmlichen Abstreifrings |
| T | Gemeinsame Tangente der Krümmungsradien R und Ro |
| $\alpha$ | Kegelwinkel bzw. Winkel der gemeinsamen Tangente zur Axialrichtung |

## Patentansprüche

1. Dreiteiliger Ölabstreifring (28), mit einem oberen Abstreifring (24), einem unteren Abstreifring (26), wobei die Abstreifringe (24,26) durch eine Expanderfeder (34), die als eine MF-Feder (36) ausgebildet ist auf Abstand gehalten und radial nach außen gedrückt werden,

   wobei der obere Abstreifring (24) einen Ringkörper (4) umfasst mit

      einer oberen Flanke (6),
      einer unteren Flanke (8),
      einer Ringinnenfläche (10) und
      einer Ringaußenfläche (12), die im Schnitt in Axialrichtung (A) eine Ringaußenkontur (14) aufweist,

   wobei der Ringkörper (4) eine Höhe (H) aufweist die in Axialrichtung (A) gesehen dem größten Abstand der oberen Flanke(6) zu der unteren Flanke (8) entspricht,
   wobei die Ringaußenkontur (14) eine Lauffläche (16) bildet, die einen Pivotpunkt (18) und einen Krümmungsradius (R) aufweist, der um einen Faktor zwischen 1,5 bis 6 kleiner ist als die Höhe (H) des oberen Abstreifrings (24),
   **dadurch gekennzeichnet, dass** der obere Abstreifring (24) am Pivotpunkt eine Krümmung (R) aufweist, die stetig und glatt in die untere Flanke (8) übergeht und zu dem Krümmungsradius (R) eine Tangente bildet, wobei sich die Krümmung über mehr als 90° erstreckt, sodass der Pivotpunkt (18) der Ringaußenkontur der Lauffläche (16) durch die Krümmung (R) gebildet wird, wodurch sich der Pivotpunkt (18) im Abstand (R) über der unteren Flanke (8) befindet, die Krümmung (R) dann direkt stetig und glatt in eine gerade Strecke übergeht, die wiederum in einen oberen Krümmungsradius (Ro) übergeht, der sowohl zu der tangentialen Strecke als auch zu der Schnittlinie der oberen Flanke tangential ist, wobei der obere Krümmungsradius (Ro) kleiner ist als der Krümmungsradius (R) an der Lauffläche (16),
   wobei im Querschnitt des oberen Abstreifrings (24) die Mittelpunkte des Krümmungsradius (R) an der Lauffläche (16) und des oberen Krümmungsradius (Ro) auf einer Geraden (G) liegen, die parallel zu einer Axialrichtung (A) des oberen Abstreifrings (24) liegt und
   wobei der untere Abstreifring (26) einen Pivotpunkt (18) aufweist, wobei der untere Abstreifring (26) im Bereich des Pivotpunktes symmetrisch ballig ausgeführt ist, der Pivotpunkt (18) sich von einer unteren Flanke des unteren Abstreifrings (26) aus auf einer axialen Höhe zwischen 47 und 54% oder zwischen 55 und 75% einer Höhe (H) des unteren Abstreifrings (26) befindet und ein Krümmungsradius (R) am Pivotpunkt (18) des unteren Abstreifrings (26) zwischen 0,05 und 0,15mm beträgt.

2. Dreiteiliger Ölabstreifring (28) nach einem der vorstehenden Ansprüche, wobei der Krümmungsradius (R) des unteren Abstreifrings (26) um einen Faktor zwischen 1,5 bis 4 kleiner ist als die Höhe (H) des unteren Abstreifrings (26).

3. Dreiteiliger Ölabstreifring (28) nach einem der vorstehenden Ansprüche, wobei der Krümmungsradius (R) des unteren und/oder oberen Abstreifrings (24, 26) zwischen 0,03 und 0,2mm, und wobei eine Höhe (H) des unteren und/oder oberen Abstreifrings (24, 26) zwischen 0,2 und 0,8mm beträgt.

4. Dreiteiliger Ölabstreifring (28) nach einem der vorstehenden Ansprüche, wobei eine radial äußerste Stelle (18) einer Ringaußenkontur (14) der Lauffläche (16) des unteren Abstreifrings (26) sich auf einer halben Höhe (H/2) des unteren Abstreifrings (26) befindet.

5. Dreiteiliger Ölabstreifring (28) nach einem der vorstehenden Ansprüche, wobei am unteren Abstreifring (26) jeweils ein unterer und ein oberer Übergang (20, 22) zwischen der Krümmung (R) und der unteren Flanke (8) bzw. einer oberen Flanke (6) des unteren Abstreifrings (26) vorgesehen ist, die im Schnitt jeweils obere bzw. untere Übergangstangenten (30, 32) an dem Krümmungsradius (R) bilden, und die sich in Bezug auf eine Radialebene jeweils in einem Winkel zwischen 30° und 75° in Richtung der oberen bzw. der unteren Flanke (8) des unteren Abstreifrings (26) erstrecken.

6. Dreiteiliger Ölabstreifring (28) nach einem der vorstehenden Ansprüche 1-4, wobei bei dem unteren Abstreifring (26) ein unterer Übergang (22) zwischen der Krümmung mit Krümmungsradius (R) und der unteren Flanke (8) vorgesehen ist, der Querschnitt konvex ausgeführt ist und stetig und glatt in die Krümmung übergeht.

7. Dreiteiliger Ölabstreifring (28) nach Anspruch 6, wobei am unteren Abstreifring (26) jeweils im Querschnitt ein unterer und ein oberer Übergang zwischen der Krümmung (R) und der unteren Flanke (8) bzw. der oberen Flanke (8) vorgesehen ist, die jeweils eine Spiralkurve bilden, wobei die Spiralkurven jeweils glatt und stetig in die Krümmung (R) bzw. die obere / untere Flanke (6, 8) übergehen.

8. Dreiteiliger Ölabstreifring (28) nach einem der vorstehenden Ansprüche 1 bis 4, wobei ein unterer Übergang (22) des unteren Abstreifrings (26) zwischen der Krümmung (R) und der unteren Flanke (8) einen Übergangs-Krümmungsradius (Ru) aufweist, der zwischen 1 mal der Höhe (H) Hund 40 mal der Höhe (H) beträgt.

**Claims**

1. A three-part oil scraper ring (28), comprising an upper scraper ring (24), a lower scraper ring (26), wherein the scraper rings (24, 26) are held at a distance by an expander spring (34), which is formed as an MF spring (36), and are pressed radially to the outside,

    wherein the upper scraper ring (24) comprises a ring body (4) comprising

        an upper flank (6),
        a lower flank (8),
        a ring inner surface (10) and
        a ring outer surface (12), which has a ring outer contour (14) in section in the axial direction (A),

    wherein the ring body (4) has a height (H), which, viewed in the axial direction (A), corresponds to the greatest distance of the upper flank (6) to the lower flank (8),

wherein the ring outer contour (14) forms a running surface (16), which has a pivot point (18) and a radius of curvature, which is smaller than the height (H) of the upper scraper ring (24) by a factor between 1.5 to 6,
**characterized in that**
at the pivot point, the upper scraper ring (24) has a curvature (R), which transitions steadily and smoothly into the lower flank (8) and forms a tangent to the radius of curvature (R), wherein the curvature extends over more than 90° so that the pivot point (18) of the ring outer contour of the running surface (16) is formed by the curvature (R), whereby the pivot point (18) is located at the distance (R) above the lower flank (8), the curvature (R) then transitions steadily and smoothly into a straight section, which, in turn, transitions into an upper radius of curvature (Ro) , which is tangential to the tangential section as well as to the line of intersection of the upper flank, wherein the upper radius of curvature (Ro) is smaller than the radius of curvature (R) at the running surface (16),
wherein in the cross section of the upper scraper ring (24), the center points of the radius of curvature (R) at the running surface (16) and of the upper radius of curvature (Ro) lie on a straight line (G), which lies parallel to an axial direction (A) of the upper scraper ring (24), and
wherein the lower scraper ring (26) has a pivot point (18), wherein the lower scraper ring (26) is embodied in a symmetrically spherical manner in the region of the pivot point (18), the pivot point (18) is located at an axial height between 47 and 54% or between 55 and 75% of a height (H) of the lower scraper ring (26), starting at a lower flank of the lower scraper ring (26), and a radius of curvature (R) at the pivot point (18) of the lower scraper ring (26) is between 0.05 and 0.15 mm.

2. The three-part oil scraper ring (28) according to one of the preceding claims, wherein the radius of curvature (R) of the lower scraper ring (26) is smaller than the height (H) of the lower scraper ring (26) by a factor between 1.5 to 4.

3. The three-part oil scraper ring (28) according to one of the preceding claims, wherein the radius of curvature (R) of the lower and/or upper scraper ring (24, 26) is between 0.03 and 0.2 mm, and wherein a height (H) of the lower and/or upper scraper ring (24, 26) is between 0.2 and 0.8 mm.

4. The three-part oil scraper ring (28) according to one of the preceding claims, wherein a radially outermost point (18) of a ring outer contour (14) of the running surface (16) of the lower scraper ring (26) is located at half the height (H/2) of the lower scraper ring (26) .

5. The three-part oil scraper ring (28) according to one of the preceding claims, wherein a lower and an upper transition (20, 22) between the curvature (R) and the lower flank (8) or an upper flank (6) of the lower scraper ring (26), respectively, is in each case provided at the lower scraper ring (26), which in section in each case form upper or lower transition tangents (30, 32), respectively, at the radius of curvature (R), and which, with respect to a radial plane, in each case extend at an angle between 30° and 75° in the direction of the upper or of the lower flank (8), respectively, of the lower scraper ring (26).

6. The three-part oil scraper ring (28) according to one of the preceding claims 1-4, wherein a lower transition (22) between the curvature with radius of curvature (R) and the lower flank (8) is provided at the lower scraper ring (26), the cross section is embodied in a convex manner, and transitions steadily and smoothly into the curvature.

7. The three-part oil scraper ring (28) according to claim 6, wherein a lower and an upper transition between the curvature (R) and the lower flank (8) or the upper flank (8), respectively, is in each case provided at the lower scraper ring (26) in cross section, which in each case form a spiral curve, wherein the spiral curves in each case transition smoothly and steadily into the curvature (R) or into the upper/lower flank (6, 8), respectively.

8. The three-part oil scraper ring (28) according to one of the preceding claims 1 to 4, wherein a lower transition (22) of the lower scraper ring (26) has a transition radius of curvature (Ru), which is between 1 time the height (H) and 40 times the height (H), between the curvature (R) and the lower flank (8).

**Revendications**

1. Segment racleur d'huile en trois parties (28), comportant un segment racleur supérieur (24), un segment racleur inférieur (26), dans lequel les segments racleurs (24, 26) sont maintenus à distance par un ressort détendeur (34) conçu comme un ressort MF (36) et poussé radialement vers l'extérieur,

     dans lequel le segment racleur supérieur (24) comprend un corps annulaire (4) comportant

         un flanc supérieur (6),
         un flanc inférieur (8),
         une surface annulaire intérieure (10) et
         une surface extérieure annulaire (12) qui, en coupe dans la direction axiale (A), présente un contour extérieur annulaire (14),

     dans lequel le corps annulaire (4) présente une hauteur (H) qui, vue dans la direction axiale (A), correspond à la plus grande distance entre le flanc supérieur (6) et le flanc inférieur (8), dans lequel le contour extérieur annulaire (14) forme une surface de roulement (16), qui présente un point d'articulation (18) et un rayon de courbure (R) est inférieur d'un facteur compris entre 1,5 et 6 à la hauteur (H) du segment racleur supérieur (24),

     **caractérisé en ce que**

     le segment racleur supérieur (24) présente une courbure (R) au point d'articulation, qui se fond directement et régulièrement au flanc inférieur (8) et est tangent au rayon de courbure (R), dans lequel la courbure s'étend sur plus de 90° de sorte que le point d'articulation (18) du contour extérieur annulaire de la surface de roulement (16) est formé par la courbure (R), moyennant quoi le point d'articulation (18) se situe à une distance (R) au-dessus du flanc inférieur (8), la courbure (R) se fond alors directement et régulièrement en une ligne droite, qui à son tour se fond dans un rayon supérieur de courbure (Ro), qui est tangentiel à la fois à la tangente et à l'intersection du flanc supérieur, dans lequel le rayon de courbure (Ro) est inférieur au rayon de courbure (R) sur la surface de roulement (16), dans lequel dans la coupe transversale du segment racleur supérieur (24), les centres du rayon de courbure (R) sur la surface de roulement (16) et du rayon de courbure supérieur (Ro) se situent sur une droite (G) parallèle à une direction axiale (A) du segment racleur supérieur (24), et dans lequel le segment racleur inférieur (26) présente un point d'articulation (18), dans lequel le segment racleur inférieur (26) est configuré en couronne symétrique au niveau du point d'articulation (18), le point d'articulation (18) partant d'un flanc inférieur du segment racleur inférieur (26) se trouve sur une hauteur axiale comprise entre 47 et 54 % ou entre 55 et 75 % d'une hauteur (H) du segment racleur inférieur (26) et d'un rayon de courbure (R) au point d'articulation (18) du segment racleur inférieur (26) entre 0,05 et 0,15 mm.

2. Segment racleur d'huile en trois parties (28) selon une quelconque des revendications précédentes, dans lequel le rayon de courbure (R) du segment racleur inférieur (26) est inférieur à la hauteur (H) du segment racleur inférieur (26) d'un facteur compris entre 1,5 et 4.

3. Segment racleur d'huile en trois parties (28) selon une quelconque des revendications précédentes, dans lequel le rayon de courbure (R) du segment racleur inférieur et/ou supérieur (24, 26) est compris entre 0,03 et 0,2 mm, et dans lequel une hauteur (H) du segment racleur inférieur et/ou supérieur (24, 26) est comprise entre 0,2 et 0,8 mm.

**4.** Segment racleur d'huile en trois parties (28) selon une quelconque des revendications précédentes, dans lequel un point radialement le plus à l'extérieur (18) d'un contour extérieur annulaire (14) de la surface de roulement (16) du segment racleur inférieur (26) se trouve à mi-hauteur (H/2) du segment racleur inférieur (26) .

**5.** Segment racleur d'huile en trois parties (28) selon une quelconque des revendications précédentes, dans lequel sur le segment racleur inférieur (26) il est prévu une transition inférieure et une transition supérieure (20, 22) entre la courbure (R) et le flanc inférieur (8) ou un flanc supérieur (6) du segment racleur inférieur (26) qui, en coupe forment chacune des tangentes de transition supérieure et inférieure (30, 32) au rayon de courbure (R) et par rapport à un plan radial s'étendent chacune selon un angle compris entre 30° et 75° en direction des flancs supérieur et inférieur (8) du segment racleur inférieur (26).

**6.** Segment racleur d'huile en trois parties (28) selon une quelconque des revendications 1 à 4 précédentes, dans lequel sur le segment racleur inférieur (26) une transition inférieure (22) est prévue entre la courbure avec un rayon de courbure (R) et le flanc inférieur (8), la section transversale a une configuration convexe et se fond régulièrement et en douceur dans la courbure.

**7.** Segment racleur d'huile en trois parties (28) selon la revendication 6, dans lequel sur le segment racleur inférieur (26) est prévu respectivement en coupe transversale une transition inférieure et une transition supérieure entre la courbure (R) et le flanc inférieur (8) ou le flanc supérieur (8), qui forment chacun une courbe en spirale, dans lequel les courbes en spirale se fondent chacune régulièrement et en douceur dans la courbure (R) ou le flanc supérieur/inférieur (6, 8).

**8.** Segment racleur d'huile en trois parties (28) selon une quelconque des revendications précédentes 1 à 4, dans lequel une transition inférieure (22) du segment racleur inférieur (26) présente entre la courbure (R) et le flanc inférieur (8) un rayon de courbure de transition (Ru) qui est compris entre 1 fois la hauteur (H) et 40 fois la hauteur (H).

11

Fig. 1   Stand der Technik

Fig. 2

Stand der Technik

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20160076649 A1
- US 20170184198 A1
- US E3270012 A1
- DE 112015001071 T5
- JP H08159282 A